Europäisches Patentamt

European Patent Office

Office européen des brevets

(11) Veröffentlichungsnummer: **0 326 787 B1**

# EUROPÄISCHE PATENTSCHRIFT

(45) Veröffentlichungstag der Patentschrift: **09.12.92**

(51) Int. Cl.⁵: **F16K 3/18**

(21) Anmeldenummer: **88810870.1**

(22) Anmeldetag: **19.12.88**

(54) **Plattenschieber.**

(30) Priorität: **04.02.88 CH 384/88**

(43) Veröffentlichungstag der Anmeldung:
**09.08.89 Patentblatt 89/32**

(45) Bekanntmachung des Hinweises auf die
Patenterteilung:
**09.12.92 Patentblatt 92/50**

(84) Benannte Vertragsstaaten:
**BE DE ES FR GB IT NL SE**

(56) Entgegenhaltungen:
**EP-A- 0 052 703**
**FR-A- 1 196 093**
**FR-A- 1 519 784**
**US-A- 3 575 377**
**US-A- 4 010 928**

(73) Patentinhaber: **GEBRÜDER SULZER AKTIENGE-**
**SELLSCHAFT**
**Zürcherstrasse 9**
**CH-8401 Winterthur(CH)**

(72) Erfinder: **Tiefenthaler, Edelbert**
**Schützenhausstrasse**
**CH-8353 Elgg(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Plattenschieber mit einem einen Eintritts- und einen Austrittsstutzen aufweisenden Gehäuse, in dem ein zwei Verschlussplatten enthaltender Schieber angeordnet ist, der quer zu den auf einer gemeinsamen Achse angeordneten Stutzen zwischen zwei einander gegenüberstehenden Sitzflächen bewegbar ist, wobei in der Schliessstellung des Schiebers die beiden Verschlussplatten an der jeweils benachbarten Sitzfläche dichtend anliegen, und der mit zwei zueinander diametral angeordneten Servokolben versehen ist, die in je einem Zylinder des Gehäuses geführt sind und deren Zylinderräume beiderseits jedes kolbens jeweils über eine Drosselstelle miteinander verbunden sind, wobei die innen liegenden Zylinderräume mit dem Durchflussraum des Eintrittsstutzens in Verbindung stehen und die aussen liegenden Zylinderräume über je ein Steuerventil mit einer Drucksenke verbindbar sind.

Ein solcher Plattenschieber ist aus der EP-A-0 052 703 bekannt, bei dem die beiden Verschlussplatten mit geringem Spiel im beweglichen Schieber gehalten sind. In der Schliessstellung des Schiebers wirkt auf die dem Austrittsstutzen benachbarte Verschlussplatte der Druck des Mediums im Eintrittsstutzen, wodurch diese Platte gegen die Sitzfläche am Austrittsstutzen gedrückt wird und das Absperren des Mediumstromes bewirkt. Die dem Eintrittsstutzen benachbarte Verschlussplatte ist dabei auf beiden Seiten vom im Eintrittsstutzen herrschenden Mediumdruck beaufschlagt, so dass sie nicht dichtend an der zugehörigen Sitzfläche anliegt. Während der Oeffnungs- und der Schliessbewegung des Schiebers liegen die gleichen Druckverhältnisse vor. Dies hat den Nachteil, dass die Dichtfläche der dem Austrittsstutzen benachbarten Verschlussplatte auf der Sitzfläche dieses Stutzens während der Bewegungen gleitet und diese Flächen Reibungskräften unterworfen sind, die zum Verschleiss und/oder zu Beschädigungen der Flächen führen können. Auch Undichtheiten sind nicht ausgeschlossen.

Der Erfindung liegt die Aufgabe zugrunde, einen Plattenschieber der eingangs genannten Art so zu verbessern, dass er unter Beibehaltung einer guten Dichtfunktion in seiner Schliessstellung während der Oeffnungs- und der Schliessbewegung des Schiebers im wesentlichen keinen Reibungskräften an den Sitz- und Dichtflächen unterliegt.

Diese Aufgabe wird erfindungsgemäss durch die kennzeichnenden Merkmale des Patentanspruchs gelöst. Durch den druckmittelbeaufschlagbaren Raum zwischen den Verschlussplatten wird es möglich, durch Druckbeaufschlagung dieses Raumes in der Schliessstellung des Schiebers eine vollkommene Abdichtung zu erzielen, indem dann beide Verschlussplatten jeweils an der zugehörigen Sitzfläche dichtend anliegen, und durch Entlasten dieses Raumes vor dem Inbewegungsetzen des Schiebers beim Oeffnen und auch während der Schliessbewegung des Schiebers Reibung zwischen den Sitz- und Dichtflächen zu vermeiden. Damit ist eine hohe Dichtheit über eine lange Lebenszeit des Plattenschiebers gewährleistet. Zum Beaufschlagen des Raumes zwischen den Verschlussplatten kann sowohl Fremdmedium als auch das durch den Plattenschieber strömende Medium, also das Eigenmedium, verwendet werden.

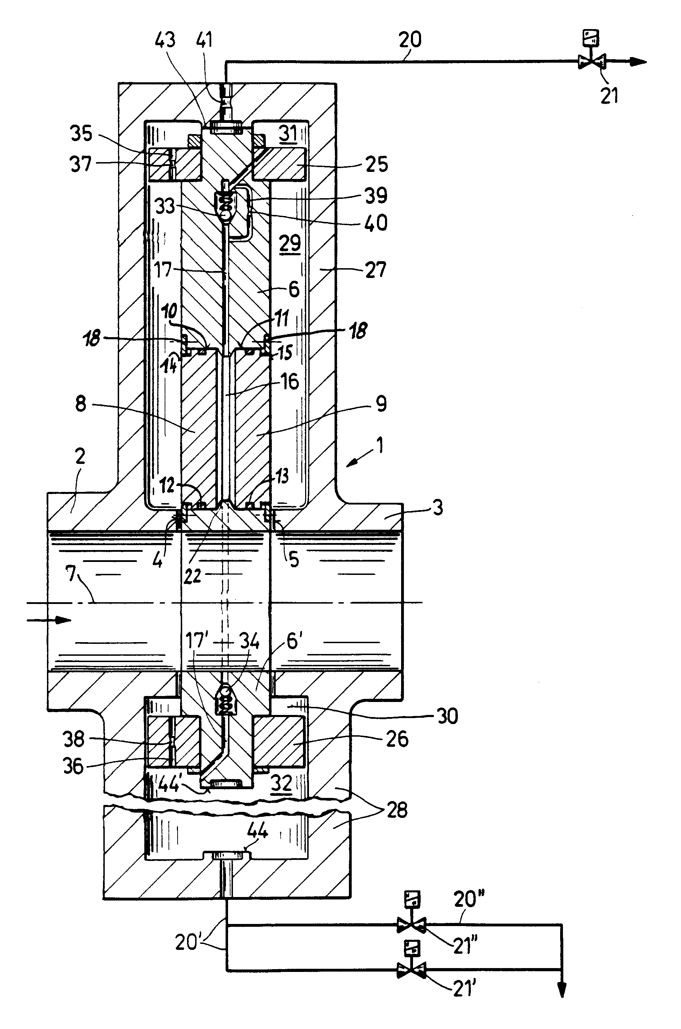

Ein Ausführungsbeispiel der Erfindung ist in der folgenden Beschreibung anhand der Zeichnung näher erläutert, die einen Längsschnitt durch einen von Eigenmedium betätigten Plattenschieber in der Offenstellung zeigt. Der Plattenschieber weist ein Gehäuse 1 mit einem Eintrittsstutzen 2 und einen Austrittsstutzen 3 auf. Die beiden Stutzen 2 und 3 fluchten miteinander und weisen an ihren einander gegenüberliegenden Enden eine ebene Sitzfläche 4 bzw. 5 auf. Zwischen den Sitzflächen 4 und 5 ist ein im Gehäuse 1 geradlinig geführter Schieber 6 quer beweglich angeordnet, und zwar aus der Offenstellung rechtwinklig zur gemeinsamen Achse 7 der beiden Stutzen nach unten in eine Schliessstellung, in der der Schieber 6 in den Durchflussquerschnitt der Stutzen 2 und 3 ragt. Das Gehäuse 1 ist mit den freien Enden des Eintrittsstutzens 2 und des Austrittsstutzens 3 an eine Leitung angeschlossen, die ein unter Druck strömendes Medium, z.B. Wasser, Dampf oder Gas, führt.

Im Schieber 6 sind zwei Verschlussplatten 8 und 9 angeordnet, die in Richtung der Achse 7 des Stutzens 2 und 3 etwas verschiebbar sind. Die Umfangsflächen der beiden Verschlussplatten 8 und 9 sind in einer passenden Ausdrehung 10 bzw. 11 des Schiebers 6 gelagert. In einer Ringnut der Umfangsfläche jeder Verschlussplatte ist ein Dichtring 12 bzw. 13 angeordnet, der an der Ausdrehung 10 bzw. 11 anliegt. Um ein Herausfallen der Verschlussplatten 8, 9 aus dem Schieber 6 zu verhindern, sind am Schieber 6 im Bereich der Ausdrehungen 10 und 11 Ringscheiben 18 lösbar befestigt, die jeweils mit ihrem inneren Rand den entsprechenden Verschlussplattenrand übergreifen. Zum gleichen Zweck könnten die Ränder der Verschlussplatten 8 und 9 mit den Ausnehmungen 10 bzw. 11 bajonettverschlussartig ausgebildet sein.

Die den Sitzflächen 4 und 5 zugewendeten Flächen der beiden Verschlussplatten 8 und 9 sind als ebene, ringförmige Dichtflächen 14 bzw. 15 ausgebildet und liegen in der Schliessstellung des Schiebers dichtend an der zugehörigen Sitzfläche an. Zwischen den einander zugewendeten Flächen der beiden Verschlussplatten 8 und 9 weist der Schieber 6 einen nach innen ragenden Ringwulst 22 auf, dessen seitliche, konische Begrenzungsflächen Anschläge für die Verschlussplatten 8 und 9 bilden. Statt konisch können die Anschlagflächen auch zueinander parallel verlaufen. Ausserdem ist zwischen diesen Verschlussplatten ein Raum 16 vorhanden, der mit einem am Ringwulst 22 ausmündenden Kanal 17 im oberen Abschnitt des Schiebers 6 in Verbindung steht.

Der Schieber 6 weist ausser dem die Verschlussplatten 8 und 9 enthaltenden Abschnitt eine Brille 6' sowie zwei diametral angeordnete Kolben 25 und 26 auf. Die Brille 6' enthält eine Durchgangsöffnung, deren Umriss und Querschnitt im wesentlichen gleich ist wie die entsprechenden Grössen des Eintritts- und des Austrittsstutzens 2 bzw. 3. Damit ergibt sich in der Offenstellung des Schiebers 6 ein geradlinig durchgehender Strömungsweg für das den Plattenschieber durchströmende Medium. Es ist auch möglich, den Durchgangsquerschnitt des Eintrittsstutzens 2 schwach konisch zu verengen und den des Austrittsstutzens 3 schwach konisch zu erweitern. In diesem Fall sind der Austrittsdurchmesser des Eintrittsstutzens 2 und der Eintrittsdurchmesser des Austrittsstutzens 3 gleich dem lichten Durchmesser der Brille 6'.

Die gleichen Durchmesser aufweisenden Kolben 25 und 26 sind von je einem Zylinder 27 bzw. 28 umgeben, die Bestandteile des Gehäuses 1 sind. In der Zeichnung unterhalb des Kolbens 25 befindet sich ein Zylinderraum 29, der im Bereich der Sitzflächen 4 und 5 mit dem Durchflussraum des Plattenschiebers in Verbindung steht. In gleicher Weise ist in der Zeichnung oberhalb des Kolbens 26 ein Zylinderraum 30 vorhanden, der mit dem Durchflussraum des Plattenschiebers in Verbindung steht. Oberhalb des Kolbens 25 ist ein Zylinderraum 31 vorhanden, der über den Kanal 17 mit dem Raum 16 zwischen den Verschlussplatten 8 und 9 in Verbindung steht. Im Kanal 17 ist ein Rückschlagventil 33 untergebracht, dessen Schliessbewegung gegen den Raum 16 gerichtet ist. Unterhalb des Kolbens 26 befindet sich ein Zylinderraum 32, der über einen Kanal 17' ebenfalls mit dem Raum 16 in Verbindung steht und der ein Rückschlagventil 34 aufweist, dessen Schliessbewegung gegen den Raum 16 gerichtet ist. Im Bereich der Brille 6' ist der Kanal 17' also um die Durchtrittsöffnung herumgeführt. Die beiden Kolben 25 und 26 weisen je einen die beidseitigen Zylinderräume 29 und 31 bzw. 30 und 32 verbindenden Kanal 35 bzw. 36 auf, in denen jeweils eine Drosselstelle 37 bzw. 38 vorgesehen ist. Im Schieber 6 ist im Bereich des Rückschlagventils 33 ein Umgehungskanal 39 mit Drosselstelle 40 vorhanden.

Am aussenliegenden Zylinderraum 31 ist eine zu einer Drucksenke führende Leitung 20 mit Steuerventil 21 angeschlossen, wobei im Mündungsbereich der Leitung 20 zwischen dem Schieber 6 und der Stirnwand des Zylinders 27 eine ringförmige Rücksitzdichtung 43 ausgebildet ist. In der Leitung 20 ist ausserdem eine Drosselstelle 41 angeordnet.

An den aussenliegenden Zylinderraum 32 ist ebenfalls eine zu einer Drucksenke führende Leitung 20' angeschlossen, in der ein Steuerventil 21' angeordnet ist. Aus Redundanzgründen ist hier eine weitere Leitung 20'' mit Steuerventil 21'' vorgesehen. Im Bereich der Mündung der Leitung 20' in den Zylinderraum 32 ist in der Stirnwand des Zylinders 28 eine ringförmige Sitzfläche 44 ausgebildet, die in Schliessstellung des Schiebers 6 mit einer dazupassenden Dichtfläche 44' in der Stirnwand des Zylinders 28 eine Rücksitzdichtung bildet.

Der Plattenschieber funktioniert wie folgt.

In der gezeichneten Stellung ist der Schieber 6 in der Offenstellung. Zum Offenhalten bleibt das Steuerventil 21 in geöffneter Stellung und die Steuerventile 21' und 21'' bleiben in geschlossener Stellung. In den Zylinderräumen 29 und 31 sowie 30 und 32 herrscht der Druck des durch den Plattenschieber strömenden Mediums. Innerhalb der Rücksitzdichtung 43 herrscht der niedrige Druck der Drucksenke wegen des offenen Steuerventils 21.

Um den Schieber zu schliessen, wird das Steuerventil 21 geschlossen und die Steuerventile 21' und 21'' werden geöffnet. Infolge dieses Oeffnens sinkt der vorher im Zylinderraum 32 herrschende Mediumdruck plötzlich auf den niedrigen Druck der Drucksenke, denn die Drosselstelle 38 im Kolben 26 verhindert zunächst einen Druckausgleich zwischen den Zylinderräumen 30 und 32. In den Zylinderräumen 30 und 29 bleibt gleicher Druck bestehen, während der im Zylinderraum 31 überwiegende Mediumdruck ein Bewegen des Schiebers in die Schliessstellung bewirkt. Die Geschwindigkeit dieser Bewegung ist abhängig von der Drosselstelle 37. In der Schiessstellung des Schiebers 6 kommen dann die Dichtflächen 44 und 44' aufeinanderzuliegen, während die Verschlussplatten 8 und 9 vor den Sitzflächen 4 und 5 stehen. In dieser Stellung des Schiebers herrscht an der Rücksitzdichtung 43 der Druck des Mediums im Eintrittsstutzen 2, während innerhalb der geschlossenen Rücksitzdichtung 44, 44' der niedrige Druck der Drucksenke sich einstellt. Während der Schliessbewegung des Schiebers 6 herrscht beiderseits der Verschlussplatten 8 und 9 der gleiche Druck, so dass diese Platten in der gezeichneten Stellung sich reibungsfrei an den Sitzflächen 4 und 5 entlang bewegen. Wenn der Schieber 6 die Schliessstellung innehat, werden die Steuerventile 21' und 21'' geschlossen, während das Steuerventil 21 weiterhin geschlossen bleibt. Damit herrscht in allen vier Zylinderräumen 29 bis 32 der Druck des Mediums im Eintrittsstutzen 2, wobei über den Umgehungskanal 39 und die Drosselstelle 40 nunmehr Medium aus dem Zylinderraum 31 in den Raum 16 zwischen den Verschlussplatten 8 und 9 gelangt und diese gegen die Sitzflächen 4 und 5 presst.

Soll der Schieber wieder in die Offenstellung bewegt werden, so wird das Steuerventil 21 geöffnet, während die Steuerventile 21' und 21" geschlossen bleiben. Das Oeffnen des Steuerventils 21 bewirkt eine plötzliche Druckentlastung im Zylinderraum 31, die sich über das dann sich öffnende Rückschlagventil 33 auch auf den Raum 16 auswirkt, so dass die Anpresskraft der Verschlussplatten 8 und 9 gegen die Sitzflächen 4 und 5 stark reduziert wird. Als nächstes bewirkt die Druckentlastung im Zylinderraum 31 die Aufwärtsbewegung des Schiebers 6 in die gezeichnete Offenstellung. In dieser Stellung stellt sich innerhalb der Rücksitzdichtung 43 wieder der niedrige Druck der Drucksenke ein, während in den vier Zylinderräumen 29 bis 32 wieder der Mediumdruck herrscht.

Abweichend von den beschriebenen Ausführungsbeispielen können die Sitzflächen 4 und 5 - statt parallel - auch in Schliessrichtung etwas konisch verlaufen. Entsprechend konisch sind dann die Verschlussplatten 8, 9 im Schieber gehalten.

Der Plattenschieber lässt sich auch derart abwandeln, dass - statt der Druckbeaufschlagung des Raumes 16 zwischen den Verschlussplatten durch das Eigenmedium - eine Druckbeaufschlagung durch ein Fremdmedium erfolgt, während das Beaufschlagen der Kolben 25 und 26 zwecks Betätigens des Schiebers 6 weiterhin durch Eigenmedium geschieht.

## Patentansprüche

1. Plattenschieber mit einem einen Eintritts- und einen Austrittsstutzen (2,3) aufweisenden Gehäuse (1), in dem ein zwei Verschlussplatten (8,9) enthaltender Schieber (6) angeordnet ist, der quer zu den auf einer gemeinsamen Achse (7) angeordneten Stutzen (2,3) zwischen zwei einander gegenüberstehenden Sitzflächen (4,5) bewegbar ist, wobei in der Schliessstellung des Schiebers (6) die beiden Verschlussplatten (8,9) an der jeweils benachbarten Sitzfläche dichtend anliegen, und der mit zwei zueinander diametral angeordneten Servokolben (25,26) versehen ist, die in je einem Zylinder (27,28) des Gehäuses geführt sind und deren Zylinderräume (29,31 bzw. 30,32) beiderseits jedes Kolbens jeweils über eine Drosselstelle (37,38) miteinander verbunden sind, wobei die innen liegenden Zylinderräume (29,30) mit dem Durchflussraum des Eintrittsstutzens (2) in Verbindung stehen und die aussen liegenden Zylinderräume (31,32) über je ein Steuerventil (21,21') mit einer Drucksenke verbindbar sind, dadurch gekennzeichnet, dass zwischen den beiden Verschlussplatten (8,9) ein gegen den Schieber (6) dichter Raum (16) vorhanden ist, der in der Schliessstellung des Schiebers durch ein Druckmittel beaufschlagbar ist, dass dieser Raum (16) über je ein Rückschlagventil (33,34) mit den beiden aussenliegenden Zylinderräumen (31,32) verbunden ist, wobei die Schliessbewegung beider Rückschlagventile (33,34) gegen diesen Raum (16) gerichtet ist, und dass ein Umgehungskanal (39) mit Drosselstelle (40) für das Rückschlagventil (33) vorgesehen ist, das dem beim Schliessen des Schiebers von Druckmittel beaufschlagten aussenliegenden Zylinderraum (31) zugeordnet ist.

## Claims

1. A gate valve with a housing (1) having an inlet port and outlet port (2, 3) and containing a gate (6) which comprises two closure plates (8, 9), is movable between two mutually opposite seats (4, 5) transversely relative to the ports (2, 3), which are situated on a common axis (7), the two closure plates (8, 9) bearing in a fluid-tight manner on the respective adjacent seat in the closed position of the gate (6), and is provided with two mutually diametrically opposite servo pistons (25, 26), which run in respective cylinders (27, 28) in the housing and of which the cylinder spaces (29, 31 or 30, 32 respectively) on both sides of each piston are interconnected by respective constrictions (37, 38), the inner cylinder spaces (29, 30) communicating with the flow passage of the inlet port (2) and the outer cylinder spaces (31, 32) being connectable to a pressure sink by way of respective pilot valves (21, 21'), characterised in that a chamber (16) fluid-tight relative to the gate (6) is provided between the two closure plates (8, 9) and can be supplied with pressure medium in the closed position of the gate, this space (16) is connected to the two outer cylinder spaces (31, 32) by way of respective non-return valves (33, 34), both of which close in the direction of this chamber (16), and a bypass duct (39) with a constriction (40) is provided for the non-return valve (33) which is associated with the outer cylinder space (31) supplied with pressure medium on closing of the gate.

## Revendications

1. Robinet-vanne à sièges parallèles comprenant une cage (1) qui comporte une tubulure d'entrée et une tubulure de sortie (2, 3) et dans laquelle est disposée une vanne (6) qui loge deux plaques obturatrices (8, 9) et qui est mobile transversalement, entre deux sièges (4, 5) qui sont placés face à face, par rapport aux tubulures (2, 3) disposées sur un axe commun (7), chacune des deux plaques obturatrices (8, 9) étant appliquée de manière étanche contre le siège voisin lorsque la vanne (6) est en position de fermeture, ladite vanne étant par ailleurs équipée de deux servo-pistons (25, 26) disposés diamètralement l'un par rapport à l'autre, dont chacun est guidé dans un cylindre (27, 28) de la cage et dont les chambres de cylindre (29, 31 ainsi que 30, 32) qui se trouvent de part et d'autre de chaque piston communiquent dans chaque cas l'une avec l'autre par l'intermédiaire d'un étranglement (37, 38), les chambres de cylindre (29, 30) situées intérieurement communiquant avec le volume de circulation de la tubulure d'entrée (2) et chaque chambre de cylindre (31, 32) située extérieurement pouvant être raccordée par une soupape individuelle de commande (21, 21') à une source de dépression, caractérisé en ce qu'il existe entre les deux plaques obturatrices (8, 9) un espace (16) qui est étanche vis à vis de la vanne (6) et dans lequel un fluide sous pression peut être envoyé lorsque la vanne est en position de fermeture, en ce que cet espace (16) communique avec chacune des deux chambres extérieures de cylindre (31, 32) par l'intermédiaire d'une soupape d'arrêt (33, 34), le mouvement de fermeture des deux soupapes d'arrêt (33, 34) étant orienté vers cet espace (16), et en ce qu'un canal de dérivation (39) comportant un étranglement (40) est prévu pour la soupape d'arrêt (33) et associé à la chambre extérieure de cylindre (31) qui reçoit le fluide sous pression lors de la fermeture de la vanne.